# EUROPEAN PATENT APPLICATION

(11) **EP 4 478 728 A1**
(43) Date of publication of application: **18.12.2024**
(21) Application number: 23752586.0
(22) Date of filing: 05.01.2023
(51) Int. Cl.: H04N 23/60, G03B 19/00

(54) **INFORMATION PROCESSING DEVICE**

(30) Priority: 08.02.2022 JP 2022017968
(71) Applicant: Sony Semiconductor Solutions Corporation, Atsugi-shi, Kanagawa 243-0014 (JP)
(72) Inventor: TAKESUE, Masaaki, Atsugi-shi, Kanagawa 243-0014 (JP)
(74) Representative: MFG Patentanwälte Meyer-Wildhagen Meggle-Freund Gerhard PartG mbB
(86) International application number: PCT/JP2023/000104
(87) International publication number: WO 2023/153117

(57) **Abstract**

An information processing apparatus includes an identification processing section identifying a subject for sensing on the basis of pieces of sensing information obtained from at least some of multiple sensors, and a control section selecting a sensor for obtaining new sensing information from among the multiple sensors.

## Description

### [Technical Field]

The present technology relates to an information processing apparatus, and in particular, to a technology for an information processing apparatus that performs sensing by use of a plurality of sensors.

### [Background Art]

In an information processing apparatus such as an imaging apparatus including multiple sensors, simultaneous driving of the multiple sensors poses various problems such as an increased amount of data in sensing information and increased power consumption. In particular, for information processing apparatuses as portable terminal equipment, a reduction in power consumption and the like are recognized as major problems to be solved.

PTL 1 listed below discloses a technology for reducing power consumption by performing operation mode control on a second and subsequent cameras on the basis of an image capturing result from a first camera.

### [Citation List]

### [Patent Literature]

[PTL 1]
Japanese Patent Laid-Open No. 2001-093616

### [Summary]

### [Technical Problem]

However, this method fails to perform operation mode control on the first camera on the basis of image capturing results from the second and subsequent cameras.

The present technology is designed to solve the problems described above, and an object of the present technology is to reduce power consumption in a case that multiple sensors are used.

### [Solution to Problem]

An information processing apparatus according to the present technology includes an identification processing section identifying a subject for sensing on the basis of pieces of sensing information obtained from at least some of multiple sensors, and a control section selecting a sensor for obtaining new sensing information from among the plurality of sensors, according to the identified subject.

Identification of the subject includes not only identification of the type of the subject such as a person, an animal, or a vehicle but also a scene in which sensing information regarding the subject is obtained. For example, a person in the daytime, a person in the nighttime, a daytime scene, a night scene, or the like is identified as the subject for sensing.

### [Brief Description of Drawings]

[FIG. 1]

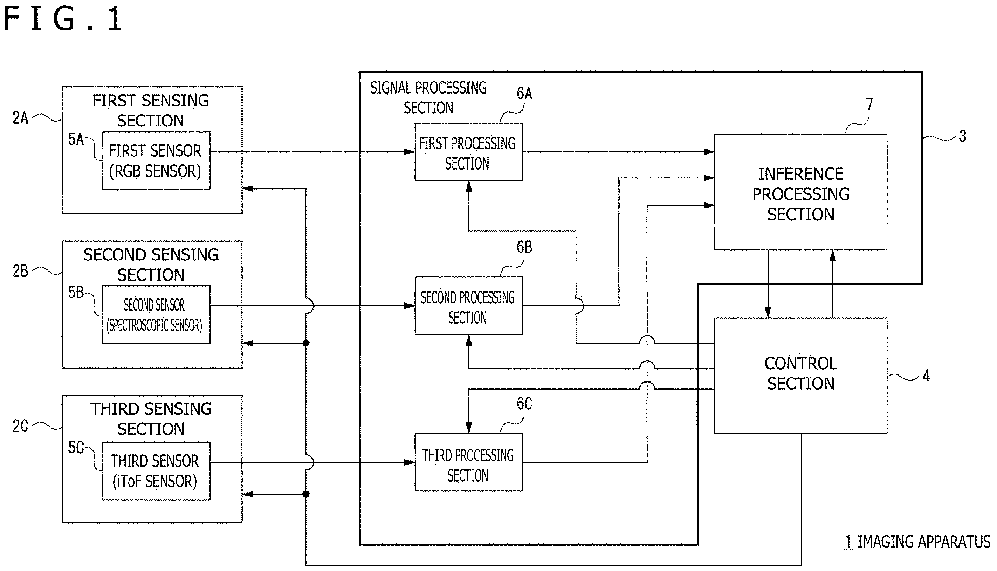

   FIG. 1 is a block diagram illustrating a configuration of an imaging apparatus in an embodiment of the present technology.
[FIG. 2]

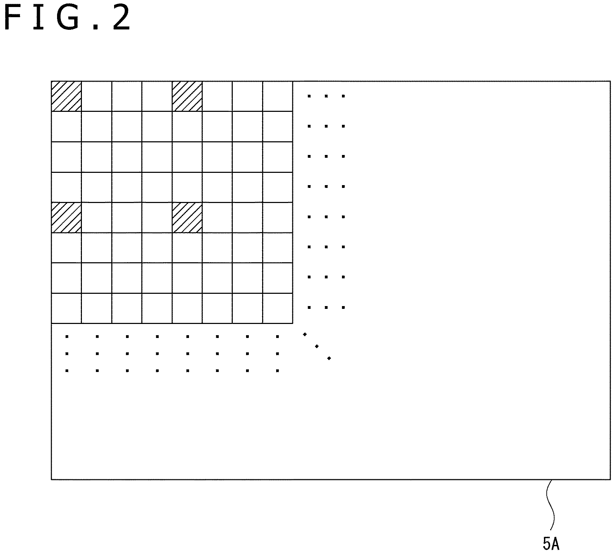

   FIG. 2 is a diagram for describing simplified sensing information in an RGB sensor.
[FIG. 3]

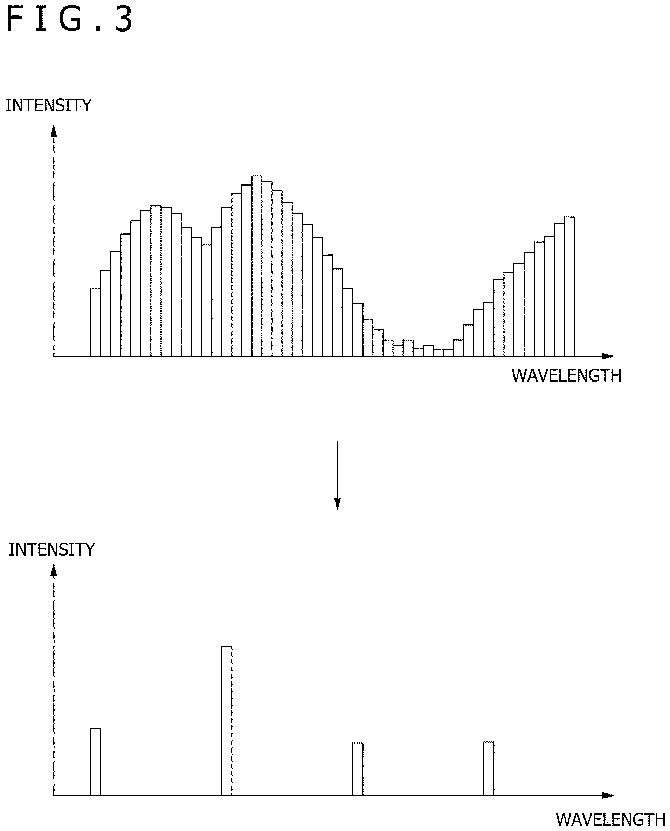

   FIG. 3 is a diagram for describing simplified sensing information in a spectroscopic sensor.
[FIG. 4]

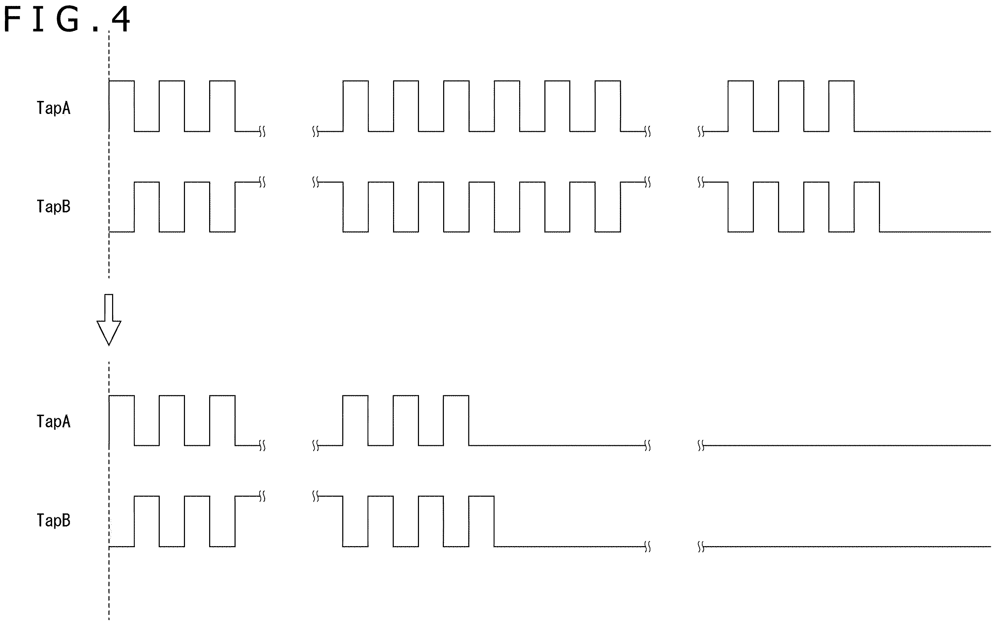

   FIG. 4 is a diagram for describing simplified sensing information in a ranging sensor.
[FIG. 5]

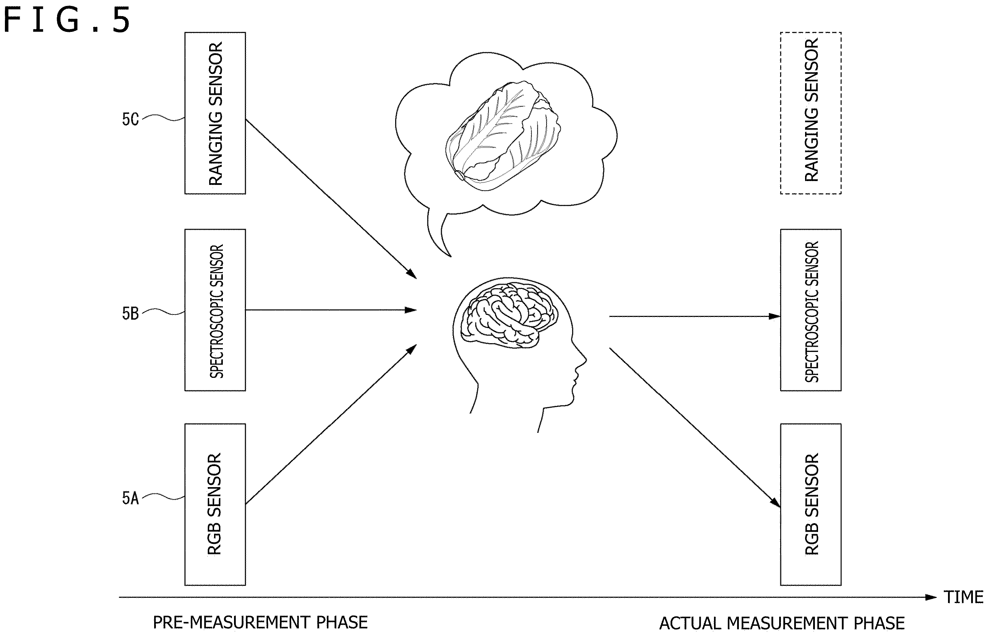

   FIG. 5 is a diagram illustrating an example of a correspondence relation between an estimated subject and selected sensors.
[FIG. 6]

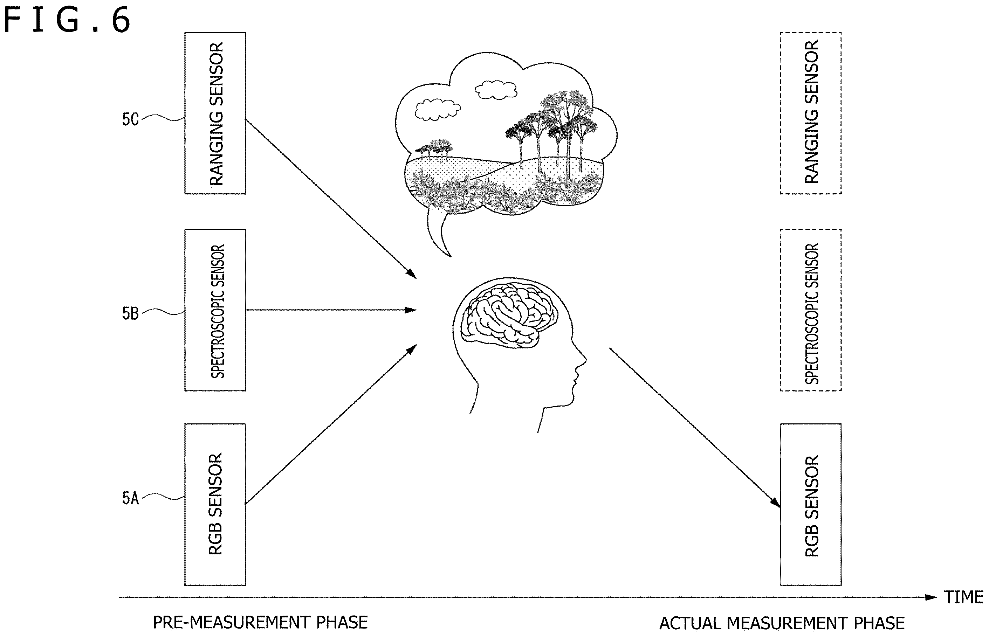

   FIG. 6 is a diagram illustrating another example of a correspondence relation between an estimated subject and a selected sensor.
[FIG. 7]

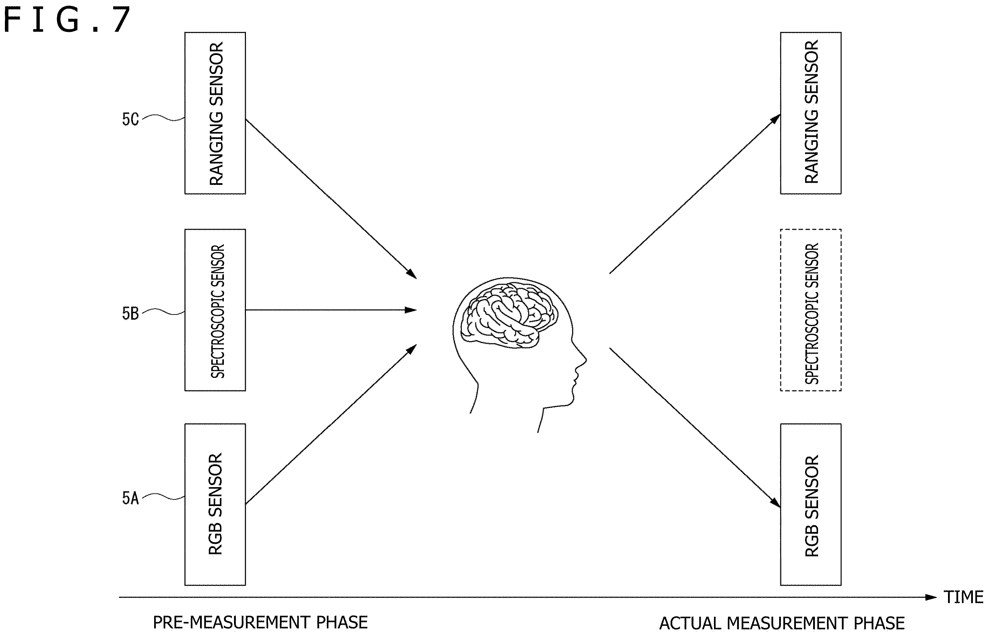

   FIG. 7 is a diagram illustrating yet another example of a correspondence relation between an estimated subject and selected sensors.
[FIG. 8]

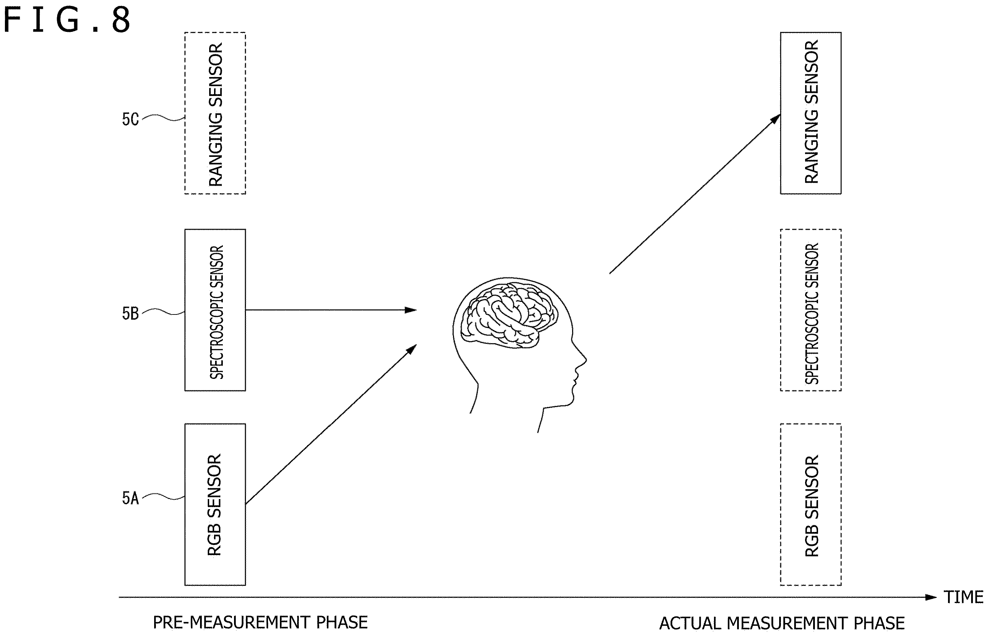

   FIG. 8 is a diagram illustrating an example of a correspondence relation between sensors driven in a pre-measurement phase and a sensor selected in an actual measurement phase.
[FIG. 9]

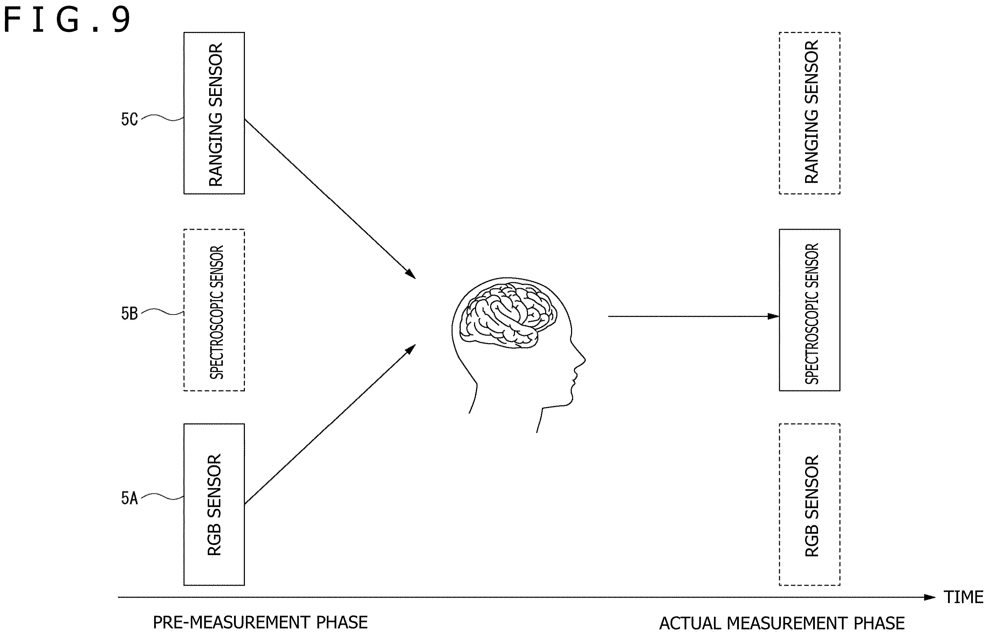

   FIG. 9 is a diagram illustrating another example of a correspondence relation between sensors driven in the pre-measurement phase and a sensor selected in the actual measurement phase.
[FIG. 10]

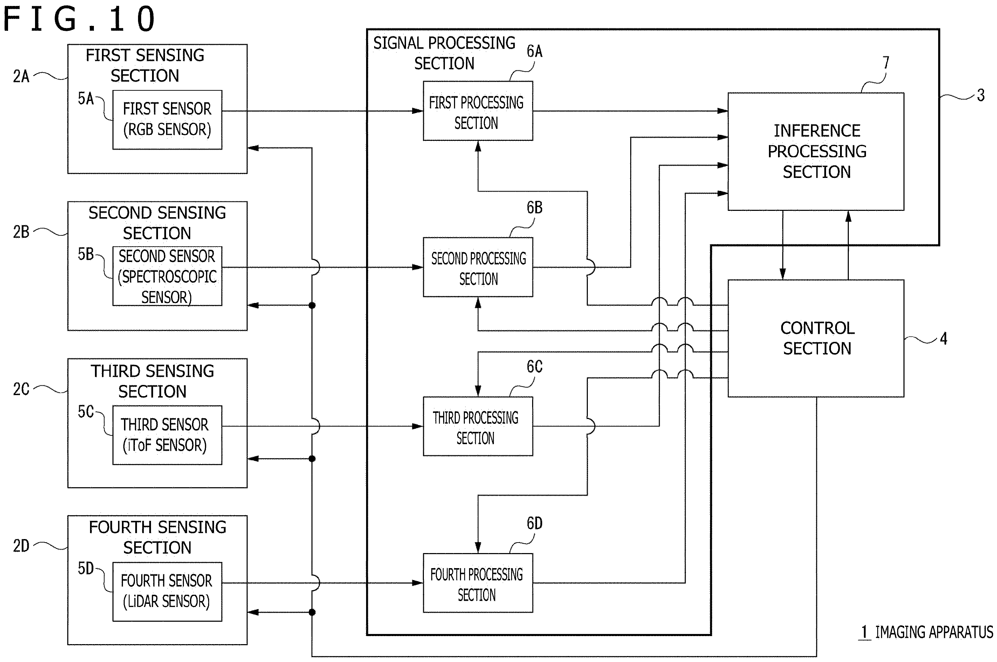

   FIG. 10 is a block diagram illustrating a configuration of an imaging apparatus with a LiDAR sensor.
[FIG. 11]

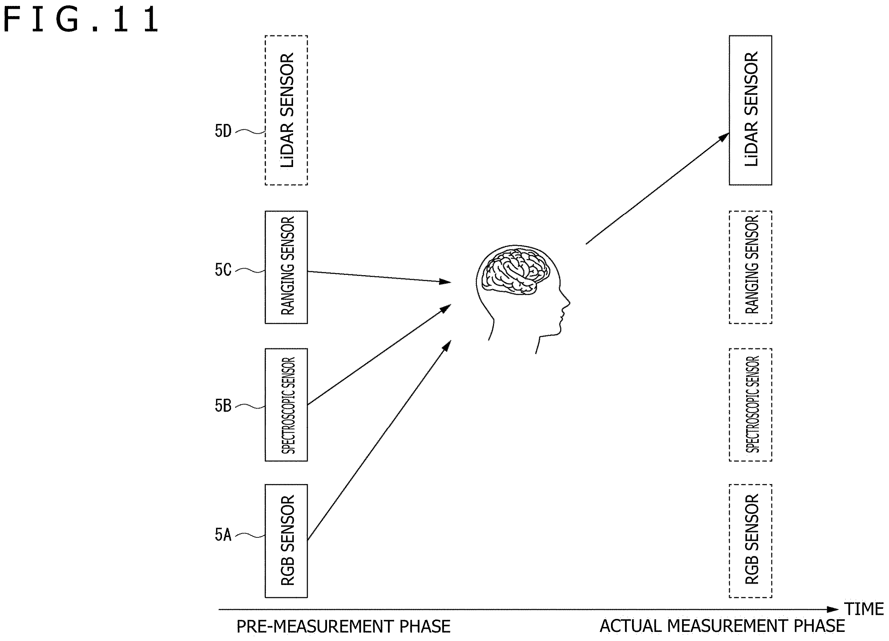

   FIG. 11 is a diagram illustrating yet another example of a correspondence relation between sensors driven in the pre-measurement phase and a sensor selected in the actual measurement phase.
[FIG. 12]

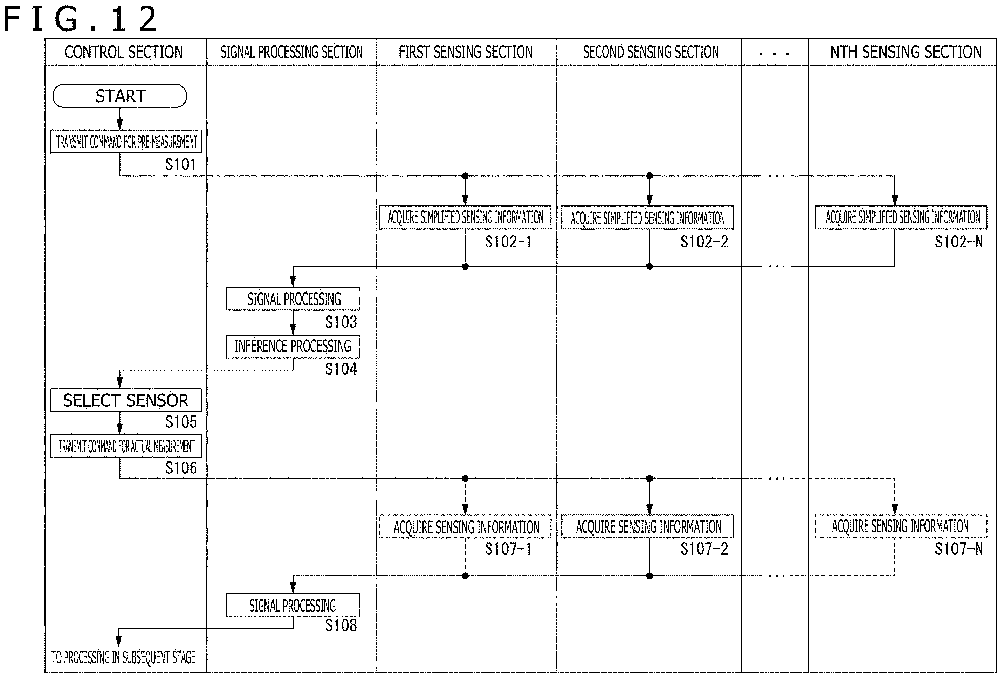

   FIG. 12 is a diagram for describing a flow of processing executed by each section of the imaging apparatus.
[FIG. 13]

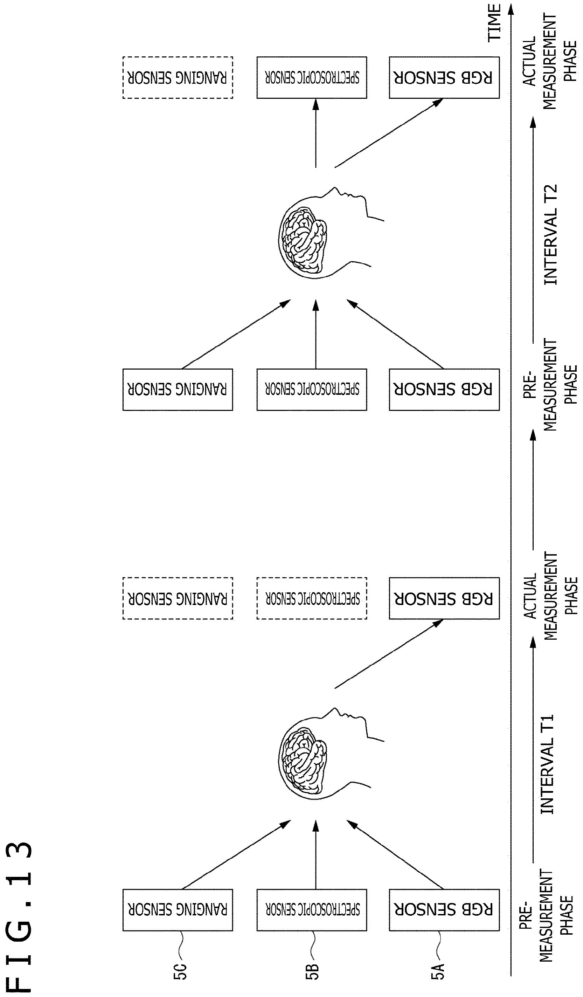

   FIG. 13 is a diagram for describing acquisition of sensing information in the pre-measurement phase and the following acquisition of sensing information in the actual measurement phase with a predetermined interval between the pre-measurement phase and the actual measurement phase according to a second embodiment.
[FIG. 14]

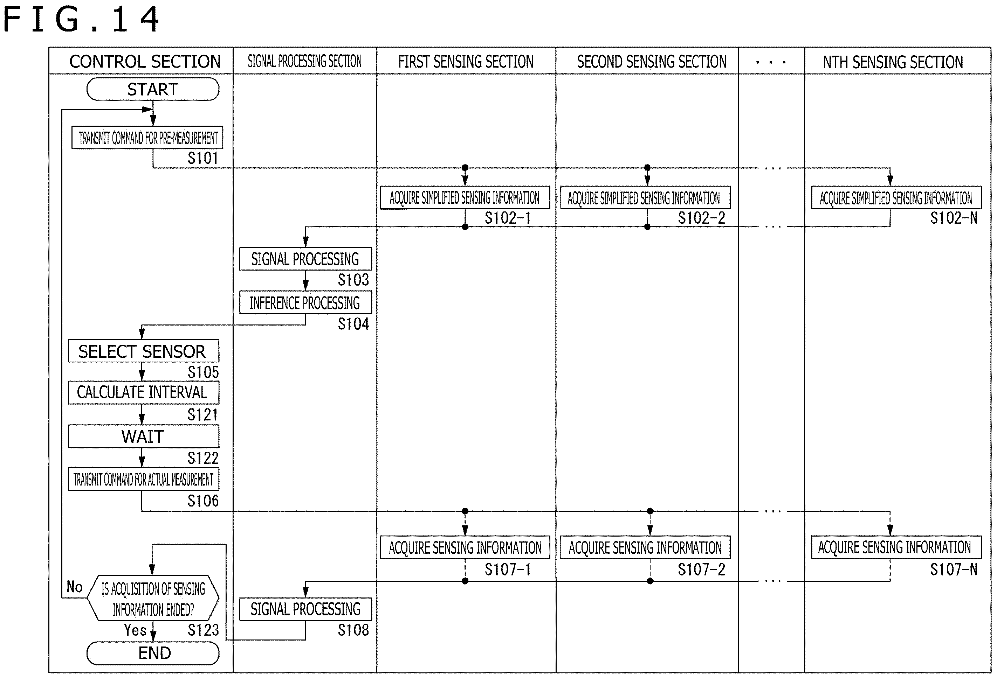

   FIG. 14 is a diagram for describing a flow of processing executed by each section of the imaging apparatus according to the second embodiment.
[FIG. 15]

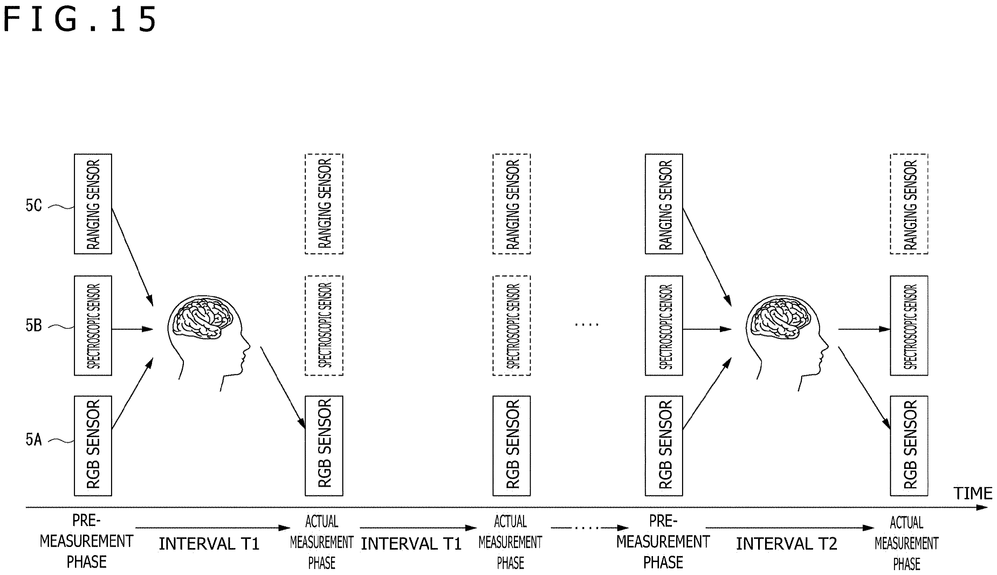

   FIG. 15 is a diagram for describing an example in which the interval varies in the actual measurement phase according to the second embodiment.
[FIG. 16]

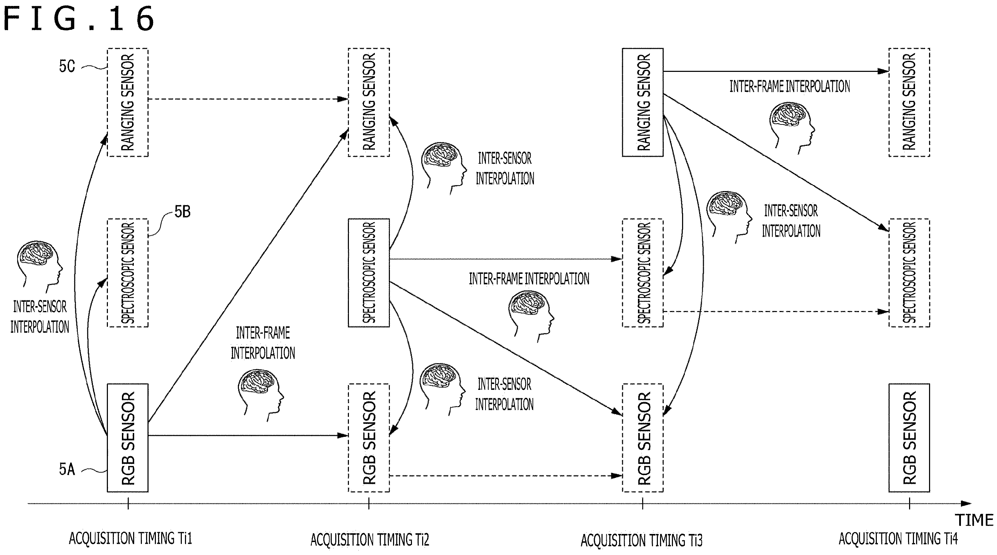

   FIG. 16 is a diagram for describing processing of inter-sensor interpolation and inter-frame interpolation executed by the imaging apparatus according to a third embodiment.
[FIG. 17]

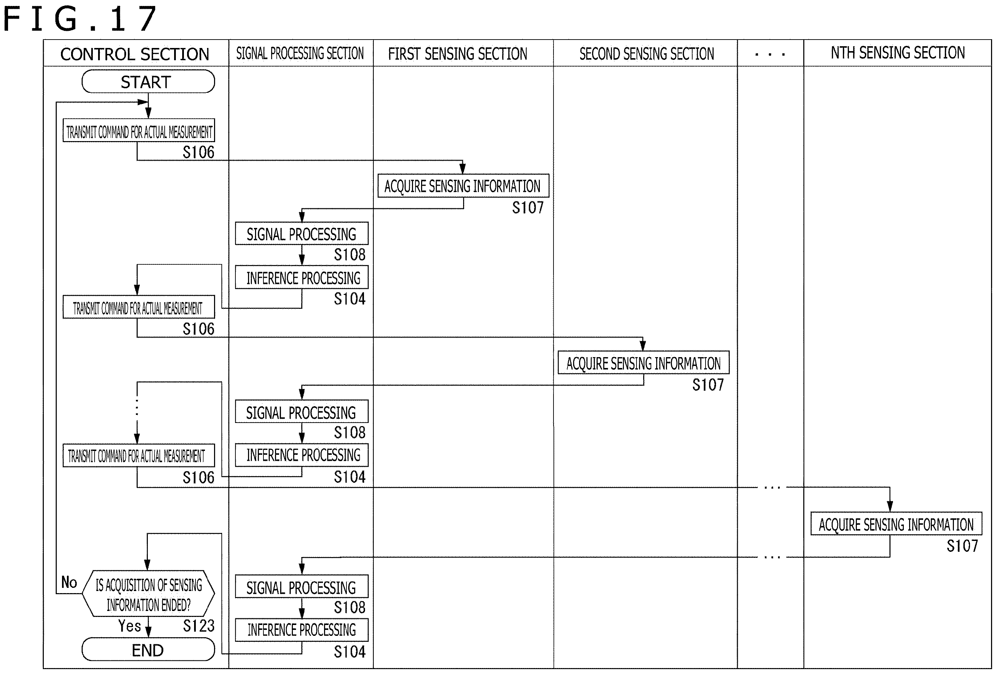

   FIG. 17 is a diagram for describing a flow of processing executed by each section of the imaging apparatus according to the third embodiment.
[FIG. 18]

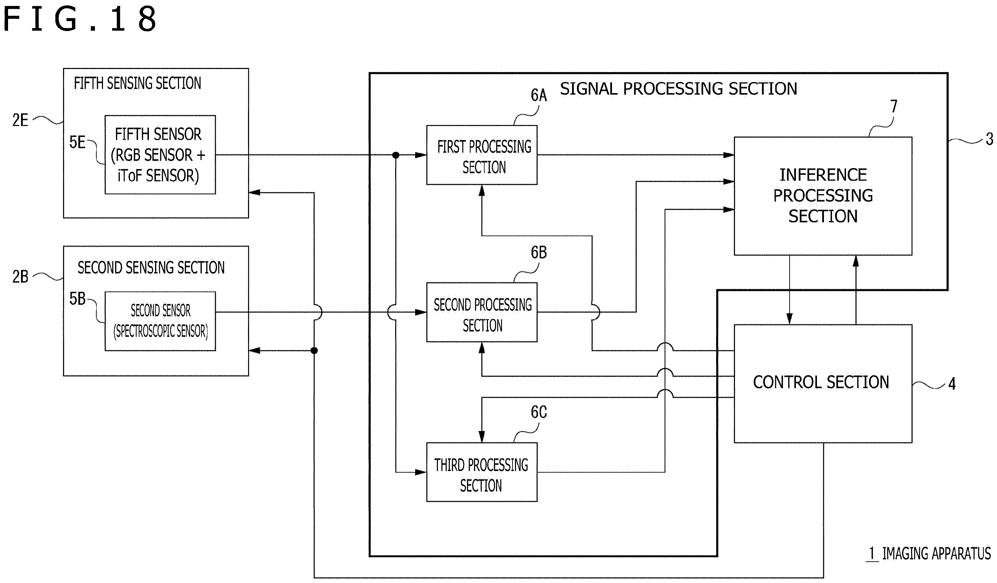

   FIG. 18 is a block diagram illustrating a configuration of an imaging apparatus in a first example of a fourth embodiment.
[FIG. 19]

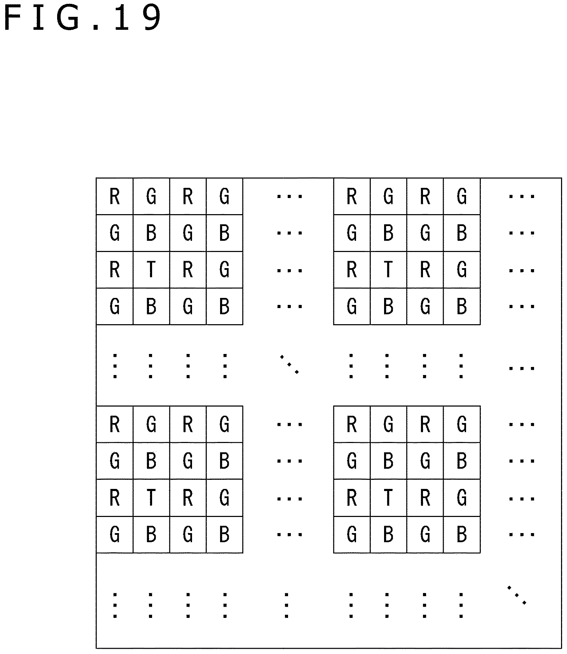

   FIG. 19 is a block diagram illustrating an example of pixel arrangement in the first example of the fourth embodiment.
[FIG. 20]

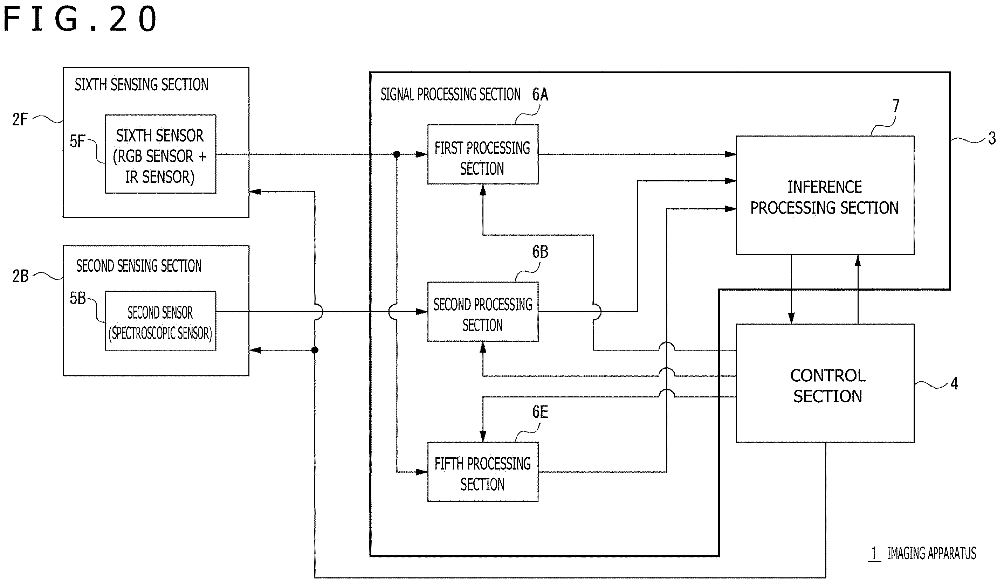

   FIG. 20 is a block diagram illustrating a configuration of an imaging apparatus in a second example of the fourth embodiment.
[FIG. 21]

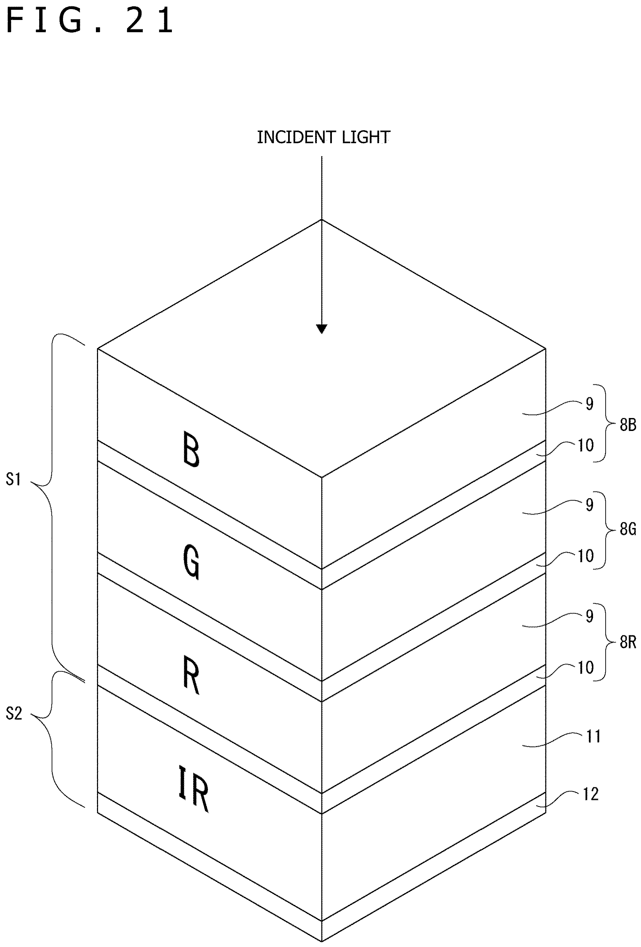

   FIG. 21 is a block diagram illustrating an example of pixel configuration in the second example of the fourth embodiment.
[FIG. 22]

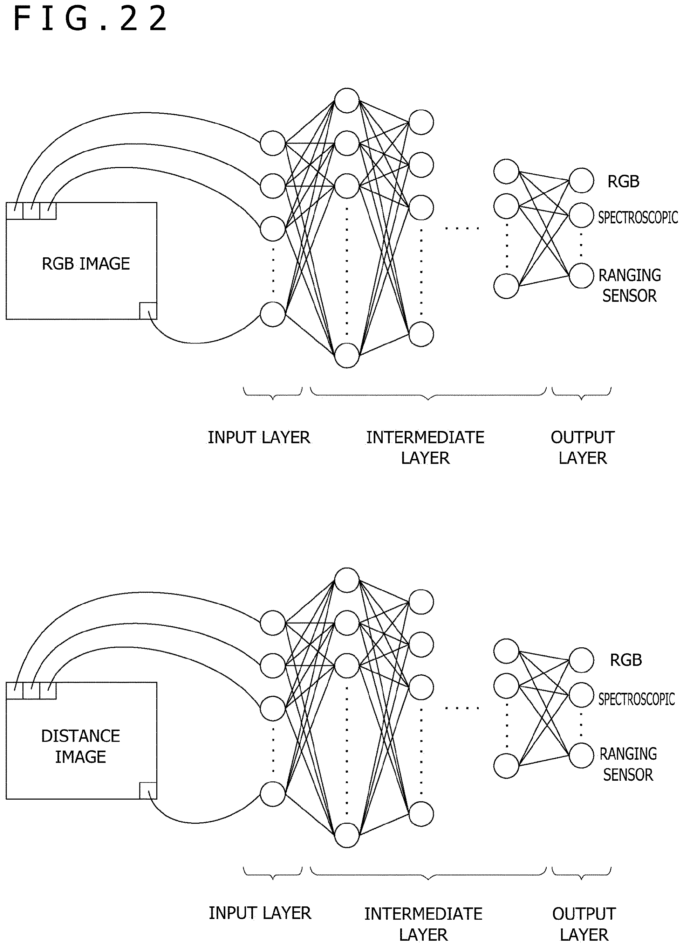

   FIG. 22 is a diagram for describing selection from sensors utilizing a neural network.

### [Description of Embodiments]

Embodiments will be described below in the following order.
<1. Configuration of Information Processing Apparatus>
<2. Flow of Processing>
<3. Second Embodiment>
<4. Third Embodiment>
<5. Fourth Embodiment>
<6. Selection from Sensors>
<7. Conclusion>
<8. Present Technology>

### <1. Configuration of Information Processing Apparatus>

An information processing apparatus in a first embodiment of the present technology is a terminal apparatus executing various types of processing on acquired sensing information, and has various possible aspects. For example, the information processing apparatus may be a portable terminal apparatus such as a cell phone or a tablet terminal, or a camera apparatus such as a digital camera. Alternatively, the information processing apparatus may be an apparatus connected to a smartphone with a camera function or a camera apparatus and executing predetermined processing on sensing information such as a captured image which is acquired from the smartphone or the like.

In an example described below, the information processing apparatus is an imaging apparatus 1 with a camera function.

FIG. 1 illustrates an example of a configuration of the imaging apparatus 1.

The imaging apparatus 1 includes a first sensing section 2A, a second sensing section 2B, and a third sensing section 2C as a plurality of sensing sections. When not distinguished from one another, the first sensing section 2A, the second sensing section 2B, and the third sensing section 2C are simply described as the sensing section 2.

The imaging apparatus 1 further includes a signal processing section 3 and a control section 4.

The first sensing section 2A includes an RGB sensor as a first sensor 5A. The RGB sensor includes a pixel array section including R (red) pixels sensitive to R light, G (green) pixels sensitive to G light, and B (blue) pixels sensitive to B light, the R, G, and B pixels being two-dimensionally arranged in a predetermined order.

The RGB sensor outputs, to the following signal processing section 3, a pixel signal according to charge obtained by photoelectric conversion in the R pixels, the G pixels, and the B pixels.

The second sensing section 2B includes a spectroscopic sensor as a second sensor 5B. By receiving reflected light from a subject via a spectroscopic element that splits incident light, the spectroscopic sensor outputs light intensity data for each wavelength band to the following signal processing section 3.

The third sensing section 2C includes, as a third sensor 5C, a ranging sensor that performs iToF (indirect Time of Flight) ranging. The third sensing section 2C performing iToF ranging further includes a light emitting section not illustrated. With the third sensor 5C receiving reflected light corresponding to pulse light radiated from the light emitting section and reflected by the subject, the third sensing section 2C outputs a detection signal to the following signal processing section 3. More specifically, the third sensor 5C employs a configuration in which pixels with light emitting elements are two-dimensionally arranged. The third sensor 5C quickly sorts charge into which light received by each light emitting element is photoelectrically converted, into two charge accumulation sections (tap A and tap B) provided for each pixel, to obtain, for each pixel, detection signals in refence to the amounts of charge accumulated in the respective charge accumulation sections.

Note that, when not distinguished from one another, the first sensor 5A, the second sensor 5B, and the third sensor 5C are simply described as the "sensor 5."

The signal processing section 3 executes various types of signal processing on digital signals output from the first sensor 5A, the second sensor 5B, and the third sensor 5C. For this purpose, the signal processing section 3 includes a first processing section 6A, a second processing section 6B, and a third processing section 6C. Note that, when not distinguished from one another, the first processing section 6A, the second processing section 6B, and the third processing section 6C are simply described as the "processing section 6."

The first processing section 6A of the signal processing section 3 performs, for example, lens correction, noise reduction, simultaneous processing, YC generation processing, color reproduction/sharpness processing, and the like on image signals (RAW image data) output from the RGB sensor as the first sensor 5A.

The simultaneous processing includes color separation processing executed such that image data for each pixel has all of R, G, and B color components. For example, for a sensor using a color filter with a Bayer arrangement, demosaic processing is executed as the color separation processing.

The YC generation processing includes generating (separating) a luminance (Y) signal and a color (C) signal from the R, G, and B image data.

The color reproduction/sharpness processing includes executing processing of adjusting gradation, saturation, tone, contrast, and the like as what is called image making.

The first processing section 6A executes the above-described signal processing generally referred to as development processing to generate image data in a predetermined format.

In this case, resolution conversion or file formation processing may be executed. The file formation processing includes executing, on image data, for example, compression coding, formatting, metadata generation or addition, or the like for recording or communication, to generate a file for recording or communication.

For example, as a still image file, an image file is generated that is in a format such as the JPEG (Joint Photographic Experts Group) format, TIFF (Tagged Image File Format), GIF (Graphics Interchange Format), or HEIF (High Efficiency Image File Format). Additionally, an image file may be generated as an MP4 format used to record video and sound compliant with MPEG-4, or the like.

Note that the first processing section 6A may generate an image file of RAW image data not subjected to the development processing.

The second processing section 6B executes processing of correcting nonlinearity of a photocurrent relative to an incident light intensity, or the like, in order to enable light intensity data (spectroscopic information) for each wavelength band output from the spectroscopic sensor as the second sensor 5B to be compared, for example, for each wavelength band.

The third processing section 6C executes various types of signal processing such as distance calculation processing corresponding to the iToF scheme, on a detection signal output from the ranging sensor as the third sensor 5C. A well-known technique can be used for a technique for calculating distance information according to the iToF scheme according to detection signals output from the two respective charge accumulation sections, and description of the technique is omitted here.

The signal processing section 3 includes an inference processing section 7.

By executing inference processing using an AI (Artificial Intelligence) model on the basis of respective pieces of sensing information (RGB images, spectroscopic information, and distance images) output from the first processing section 6A, the second processing section 6B, and the third processing section 6C, the inference processing section 7 functions as an identification processing section identifying a subject for sensing.

Identification of the subject includes not only identification of the type of the subject such as a person, an animal, or a vehicle, but also identification of a scene in which sensing information regarding the subject is obtained. For example, a person in the daytime, a person in the nighttime, a daytime scene, a night scene, or the like is identified as the subject for sensing.

The inference processing section 7 may identify the subject on the basis of all pieces of the sensing information output from the first sensor 5A, the second sensor 5B, and the third sensor 5C or may identify the subject on the basis of pieces of sensing information output from some of the sensors 5 which are driven.

Note that, by identifying the subject on the basis of all pieces of the sensing information, the accuracy of estimated information can be improved.

In the present embodiment, the inference processing section 7 makes an inference to perform one operation of acquiring sensing information (target sensing information) as in the case of a still image. An inference result for the subject is output to the control section 4.

The control section 4 executes processing of selecting the sensor 5 for obtaining appropriate sensing information regarding the identified subject from among the plurality of sensors 5. The selection processing may utilize an AI model.

The control section 4, for example, selects the appropriate sensor 5 for obtaining a still image according to the inference result for the subject.

By feeding control signals to the first sensing section 2A, the second sensing section 2B, and the third sensing section 2C, the control section 4 drives each sensing section 2. At this time, by feeding the control signals in such a manner as to prevent some of the sensing sections 2 from being driven, the control section 4 reduces power consumption.

By feeding control signals to the first processing section 6A, the second processing section 6B, and the third processing section 6C, the control section 4 causes each processing section to execute required signal processing. At this time, by feeding the control signals in such a manner as to prevent the processing sections 6 corresponding to the sensing sections 2 not driven from executing unnecessary signal processing, reduction in power consumption and the like can be achieved.

The control section 4 feeds a control signal for causing the inference processing section 7 to execute inference processing.

Note that estimated information regarding the subject is suitably utilized to allow the control section 4 to appropriately select a predetermined sensor 5 for obtaining the target sensing information regarding the subject. That is, the control section 4 desirably selects the appropriate sensor 5 according to the estimated type of the subject.

Here, a phase for obtaining the target sensing information is designated as an "actual measurement phase." A phase for obtaining sensing information for identifying the subject is designated as a "pre-measurement phase." The inference processing section 7 identifies the subject on the basis of the sensing information acquired in the pre-measurement phase, and the control section 4 selects the appropriate sensor 5 according to the identified subject and acquires the appropriate sensing information for the actual measurement phase.

However, it is inefficient in terms of power consumption and the like to maximally drive all of the sensors 5 to obtain pieces of sensing information in the pre-measurement phase in order to obtain the appropriate sensing information in the actual measurement phase.

Therefore, the control section 4 in the present embodiment drives all of the sensors 5 in a simplified manner to obtain pieces of simplified sensing information in order to obtain the appropriate sensing information in the actual measurement phase.

In a case where the power consumption of each of the sensors 5 driven in the pre-measurement phase can be sufficiently reduced, a reduction in power consumption obtained by preventing some of sensors 5 from being driven in the actual measurement phase may exceed an increase in power consumption obtained by using all of the sensors 5 to obtain pieces of simplified sensing information.

Here, specific examples of the simplified sensing information acquired in the pre-measurement phase will be described.

For the RGB sensor as the first sensor 5A, the simplified sensing information is sensing information obtained from pixels fewer than effective pixels. For example, by executing readout processing on only the pixels resulting from appropriate decimation in the horizontal direction and the vertical direction, power consumption related to readout and power consumption related to output of pixel signals are reduced.

For example, as illustrated by hatching in FIG. 2, readout processing is executed on only one of four pixels in the horizontal direction and the vertical direction.

For the spectroscopic sensor as the second sensor 5B, the simplified sensing information is sensing information acquired with use of only part of the measured wavelengths. For example, simplified sensing information is acquired with power consumption reduced by measuring light intensity with use of a set of channels fewer than wavelength channels that can be measured by the spectroscopic sensor (see FIG. 3).

For the ranging sensor as the third sensor 5C, appropriate distance information is acquired as simplified sensing information with power consumption reduced by reducing the number of tap switching operations below the number of tap switching operations (predetermined number of operations) required for appropriate ranging (see FIG. 4).

By performing simplified sensing in the pre-measurement phase as described above, the sensors 5 driven in the actual measurement phase can be appropriately selected with power consumption reduced. Additionally, limiting the driven sensors 5 allows for a reduction in electromagnetic noise, the amount of heat generated, the amount of data, and the like. Allowing for a reduction in electromagnetic noise enables a reduction in the number of components for electromagnetic noise prevention and in costs, man-hour for implementation, and man-hour for testing. Additionally, allowing for a reduction in the amount of heat generated enables a reduction in the number of radiation components. Furthermore, allowing for a reduction in the amount of data enables a reduction in storage consumption and thus in the number of memory components. These also enable a reduction in costs, man-hour for implementation, and man-hour for testing.

Besides, the reduced number of components enables a reduction in man-hour for design and an increase in the degree of freedom for design of the imaging apparatus 1.

The control section 4 selects the sensor 5 to be driven in the actual measurement phase according to the subject estimated on the basis of the simplified sensing information obtained as described above.

An example of a correspondence relation between the estimated subject and the selected sensor 5 will be described.

For example, in a case where the subject is estimated to be a plant such as a vegetable, the control section 4 selects the first sensor 5A as an RGB sensor and the second sensor 5B as a spectroscopic sensor (see FIG. 5) in order to obtain information regarding the degree of freshness of the subject.

By acquiring respective pieces of sensing information with use of the first sensor 5A and the second sensor 5B in the actual measurement phase, the control section 4 can obtain a still image of the plant (RGB image) and sensing information regarding the degree of freshness thereof (spectroscopic information). The third sensor 5C as a ranging sensor is not driven, and thus, a reduction in power consumption and the like can be achieved.

Another example of the correspondence relation between the estimated subject and the selected sensor 5 will be described.

For example, in a case where the subject is estimated to be a scenery, the control section 4 determines that no sensing information needs to be acquired for the distance and wavelength for the subject, and selects the first sensor 5A as an RGB sensor (see FIG. 6).

By acquiring sensing information using the first sensor 5A in the actual measurement phase, a still image of the scenery can be obtained as the sensing information. The second sensor 5B as a spectroscopic sensor and the third sensor 5C as a ranging sensor are not driven, and thus, a reduction in power consumption and the like can be achieved.

Yet another example of the correspondence relation between the estimated subject and the selected sensor 5 will be described.

For example, in a case where the distance to the subject is less than a predetermined distance, the control section 4 selects the third sensor 5C as a ranging sensor in addition to the first sensor 5A as an RGB sensor (see FIG. 7) in order to more accurately measure the distance to the subject.

Sensing using the second sensor 5B is not performed in the actual measurement phase, and thus, a reduction in power consumption and the like can be achieved.

Note that pieces of simplified sensing information may be acquired by driving some of the first sensor 5A, the second sensor 5B, and the third sensor 5C in the pre-measurement phase.

For example, there will be described a case in which pieces of simplified sensing information are acquired in the pre-measurement phase by driving the first sensor 5A as an RGB sensor and the second sensor 5B as a spectroscopic sensor, and as a result of estimation of the subject, the subject is estimated to be the face of a person, as illustrated in FIG. 8.

At this time, the control section 4 selects the third sensor 5C as a ranging sensor, as the sensor 5 to be driven in the actual measurement phase. That is, upon detecting a living object shaped like the face of a person on the basis of the RGB sensor and the spectroscopic sensor, the control section 4 further selects the ranging sensor to acquire sensing information regarding the uneven shape of the subject and more appropriately determine whether or not the subject is actually the face of a person.

Such processing can be used for personal authentication. That is, in a case where a living object is detected as the subject, distance information (unevenness information) is acquired to determine whether or not the living object is a particular person.

Additionally, another example will be described with reference to FIG. 9.

Pieces of simplified sensing information are assumed to be obtained by driving the first sensor 5A as an RGB sensor and the third sensor 5C as a ranging sensor in the pre-measurement phase. Then, a subject shaped like the face of a person is assumed to be detected as a result of estimation based on the pieces of simplified sensing information.

In this case, the control section 4 selects the second sensor 5B as a spectroscopic sensor and executes the processing in the actual measurement phase. Accordingly, the control section 4 can appropriately determine whether or not the subject shaped like a face is a living object.

Note that an example has been described in which the imaging apparatus 1 includes the RGB sensor as the first sensor 5A, the spectroscopic sensor as the second sensor 5B, and the ranging sensor as the third sensor 5C but that the imaging apparatus 1 may include any other sensor 5.

As an example, the imaging apparatus 1 includes a fourth sensing section 2D, and the fourth sensing section 2D includes a LiDAR (Light Detection And Ranging) sensor as a fourth sensor 5D (see FIG. 10).

The signal processing section 3 includes a fourth processing section 6D, and the fourth processing section 6D executes various types of signal processing for generating cloud data from sensing information output from the LiDAR sensor as the fourth sensor 5D.

A configuration as illustrated in FIG. 10 is an example of an aspect, for example, as an in-vehicle imaging apparatus 1.

The control section 4 is assumed to obtain pieces of simplified sensing information by driving the first sensor 5A as an RGB sensor, the second sensor 5B as a spectroscopic sensor, and the third sensor 5C as a ranging sensor in the pre-measurement phase. Then, as a result of estimation on the basis of the pieces of simplified sensing information, a moving subject such as a preceding vehicle (mobile body) is assumed to be detected.

In this case, the control section 4 selects the fourth sensor 5D as the LiDAR sensor, as the sensor 5 to be driven in the actual measurement phase for detailed identification as to what the mobile body is (see FIG. 11).

By analyzing the subject as another vehicle on the basis of the sensing information obtained in the actual measurement phase, the positional relation with the other vehicle can appropriately be limited. In the actual measurement phase, the first sensor 5A, the second sensor 5B, and the third sensor 5C are not driven, and thus, a reduction in power consumption and the like can be achieved.

### <2. Flow of Processing>

With reference to FIG. 12, description will be given of a flow of processing executed by the signal processing section 3, the control section 4, and the like of the imaging apparatus 1 described above.

To acquire sensing information regarding the subject, the control section 4 first transmits a command for pre-measurement to each of the sensing sections 2 in step S101.

Upon receiving the command, each of the sensing sections 2 (first sensing section 2A, second sensing section 2B, ..., Nth sensing section 2N) acquires and outputs simplified sensing information to the signal processing section 3 in step S102 (steps S102-1, S102-2, ..., S102-N) .

The signal processing section 3 executes signal processing according to the types of the various sensors 5 (step S103) and performs inference processing on the subject (step S104).

Information of an inference result is output to the control section 4.

In step S105, the control section 4 executes processing of selecting the sensor 5 to be driven in the actual measurement phase on the basis of the inference result, and in step S106, transmits, to a selected sensing section 2, a command for obtaining sensing information as actual measurement.

The sensing section 2 having received the command (second sensing section 2B in FIG. 12) acquires sensing information in the actual measurement phase in step S107 (step S107-2) and transmits the sensing information to the signal processing section 3.

In step S108, the signal processing section 3 executes signal processing on the sensing information and transmits the result of the processing to the control section 4.

Subsequently, the control section 4 provides data to each application that utilizes the sensing information subjected to the signal processing, and the like.

### <3. Second Embodiment>

The first embodiment includes appropriate one acquisition of sensing information as in the case of a still image. A second embodiment includes a plurality of appropriate operations for acquiring sensing information as in the case of video.

A configuration example of the imaging apparatus 1 is similar to that illustrated in FIG. 1. A difference from the first embodiment is that the control section 4 does not only select the sensor 5 to be driven in the actual measurement phase on the basis of the simplified sensing information but also executes processing of determining a timing for acquiring sensing information in the actual measurement phase.

The pre-measurement phase and the actual measurement phase in the second embodiment will be described with reference to FIG. 13.

Each sensing section 2 acquires simplified sensing information in the pre-measurement phase. The simplified sensing information is subjected to signal processing by each processing section of the signal processing section 3, and the processed simplified sensing information is output to the control section 4.

On the basis of the simplified sensing information subjected to the signal processing, the control section 4 selects the sensor 5 to be driven in the actual measurement phase (first sensor 5A as an RGB sensor in the example illustrated in FIG. 13) and determines an interval T1 before the sensor 5 is driven.

Subsequently, simplified sensing information is acquired again in the pre-measurement phase, and on the basis of the simplified sensing information, the control section 4 selects the sensor 5 to be driven in the actual measurement phase (first sensor 5A as an RGB sensor and the second sensor 5B as a spectroscopic sensor in the example illustrated in FIG. 13) and determines an interval T2.

Determining the intervals T1 and T2 as described above can prevent an excessive amount of driving of the sensor 5 for acquiring sensing information, allowing suppression of power consumption and the like.

A flow of processing by each section in the second embodiment will be described with reference to FIG. 14. Note that processing similar to that in FIG. 12 is denoted by the same step numbers and that description of the steps is omitted as appropriate.

First, in step S101, the control section 4 transmits the command for pre-measurement to each sensing section 2.

Upon receiving the command, each of the sensing sections 2 (first sensing section 2A, second sensing section 2B, ..., Nth sensing section 2N) acquires and outputs simplified sensing information to the signal processing section 3 in step S102 (steps S102-1, S102-2, ..., S102-N) .

The signal processing section 3 executes signal processing according to the types of the various sensors 5 (step S103) and performs the inference processing on the subject (step S104).

Information of an inference result is output to the control section 4.

In step S105, the control section 4 executes processing of selecting the sensor 5 to be driven in the actual measurement phase on the basis of the inference result, and in step S121, calculates an interval for obtaining sensing information in the actual measurement phase.

In step S122, the control section 4 spends a wait time corresponding to the calculated interval, and in step S106, transmits, to the selected sensing section 2, the command for obtaining sensing information as actual measurement.

The sensing section 2 having received the command acquires sensing information in the actual measurement phase in step S107 and transmits the sensing information to the signal processing section 3.

In step S108, the signal processing section 3 executes signal processing on the sensing information and transmits the result of the processing to the control section 4.

The control section 4 determines in step S123 whether or not to end acquisition of sensing information. The determination processing may be based on, for example, operation of the user or whether a predetermined number of operations for acquiring sensing information are completed.

In a case where the acquisition of sensing information is determined not to be ended, the control section 4 returns to step S101. On the other hand, in a case where the acquisition of sensing information is determined to be ended, the control section 4 and each of the other sections end the series of processing operations illustrated in FIG. 14.

Note that methods other than the alternate repetition of the pre-measurement phase and the actual measurement phase are possible. For example, a method is possible in which the pre-measurement phase is continuously followed by the actual measurement phase for acquisition. Then, after the actual measurement phase is repeated a predetermined number of times or for a predetermined period of time, the pre-measurement phase may be executed again.

Specific description will be provided with reference to FIG. 15.

Each sensing section 2 acquires simplified sensing information in the pre-measurement phase. The simplified sensing information is subjected to the signal processing by each processing section of the signal processing section 3, and the processed simplified sensing information is output to the control section 4.

On the basis of the simplified sensing information subjected to the signal processing, the control section 4 selects the sensor 5 to be driven in the actual measurement phase (first sensor 5A as an RGB sensor in the example illustrated in FIG. 15) and determines the interval T1 before the sensor 5 is driven.

Once the sensor 5 to be driven and the interval T1 are determined, the sensing section 2 with the selected sensor 5 performs acquisition of sensing information after each interval T1 as the actual measurement phase. The acquired sensing information is subjected to the required signal processing each time by the signal processing section 3.

After a certain period of time longer than the interval T1 elapses or acquisition of sensing information as a predetermined number of actual measurement phases is finished, simplified sensing information is acquired again in the pre-measurement phase. On the basis of the simplified sensing information, the control section 4 selects the sensor 5 to be driven in the actual measurement phase (first sensor 5A as an RGB sensor and the second sensor 5B as a spectroscopic sensor in the example illustrated in FIG. 15) and determines the interval T2.

After the sensor 5 and the interval T2 are determined, operations for acquiring sensing information are continuously performed via the interval T2 as the actual measurement phases.

As described above, without the need to interpose the pre-measurement phase between frames, sensing information desired to some degree can appropriately be acquired.

Note that, in a case where sensing information is acquired a plurality of times as the actual measurement phases, precise sensing information may be acquired by allowing each sensor 5 to deliver the maximum performance instead of acquiring simplified sensing information in the pre-measurement phase.

That is, the sensor 5 determined not to be driven in the actual measurement phase is not used to acquire sensing information or is not driven for a certain subsequent period of time, and thus, a significant power consumption reduction effect can be exerted.

### <4. Third Embodiment>

In a third embodiment, the imaging apparatus 1 is intended to drive the sensing sections 2 in order at each timing for acquiring sensing information.

A configuration example of the imaging apparatus 1 is similar to that illustrated in FIG. 1. Differences from the first embodiment are that the signal processing section 3 executes estimation processing as inter-sensor interpolation and inter-frame interpolation and that the control section 4 does not execute the processing of selecting the sensor 5 for the actual measurement phase.

Note that, in the third embodiment, no pre-measurement phase is present, with only the actual measurement phase present. Alternatively, acquisition of simplified sensing information is first performed by the pre-measurement phase, and as a result of analysis of the simplified sensing information, acquisition of sensing information may be determined to be performed only in the actual measurement phase according to the third embodiment.

The actual measurement phase in the third embodiment will be described with reference to FIG. 16.

Note that, for timings for acquiring sensing information, corresponding points of time are described as acquisition timings Ti1, Ti2, ....

By driving the sensor 5 (first sensor 5A as an RGB sensor in FIG. 16) of the selected one of the sensing sections 2, the sensing information (RGB image in the example in FIG. 16) at the acquisition timing Ti1 is obtained.

This sensing information is subjected to the signal processing by the first processing section 6A of the signal processing section 3, and the processed simplified sensing information is output to the inference processing section 7.

By executing the estimation processing utilizing an AI model, the inference processing section 7 performs inter-sensor interpolation based on an input of an RGB image. The inter-sensor interpolation generates spectroscopic information that is to be obtained by the second sensor 5B as a spectroscopic sensor at the acquisition timing Ti1, and generates a distance image that is to be obtained by the third sensor 5C as a ranging sensor.

Note that, at this time, the inference processing section 7 may execute processing of identifying the subject on the basis of the RGB image. The processing of inter-sensor interpolation may be executed according to the subject. That is, the inter-sensor interpolation may be performed in consideration of the type of the subject and the like.

At the next acquisition timing Ti2 for acquiring sensing information, the control section 4 drives the second sensor 5B as a spectroscopic sensor.

This allows spectroscopic information regarding the subject to be obtained.

The spectroscopic information is subjected to the signal processing by the first processing section 6B of the signal processing section 3, and the processed simplified sensing information is output to the inference processing section 7.

The inference processing section 7 uses the inference processing to perform inter-sensor interpolation on the basis of an input of spectroscopic information to obtain an RGB image and a distance image to be obtained at the acquisition timing Ti2.

Additionally, by performing inter-frame interpolation as inference processing utilizing an AI model, the inference processing section 7 uses, as an input, the RGB image obtained from the first sensor 5A as an RGB sensor at the acquisition timing Ti1 to obtain an RGB image and a distance image at the acquisition timing Ti2.

That is, the estimation of the RGB image at the acquisition timing Ti2 is performed on the basis of the RGB image obtained at the acquisition timing Ti1 and the spectroscopic information obtained at the acquisition timing Ti2.

Similarly, the estimation of the distance image at the acquisition timing Ti2 is performed on the basis of the RGB image obtained at the acquisition timing Ti1 and the spectroscopic information obtained at the acquisition timing Ti2.

Note that, as indicated by a dashed arrow in FIG. 16, a distance image estimated to be obtained at the acquisition timing Ti1 may be used to estimate a distance image at the acquisition timing Ti2.

Note that, at this time, the processing by the inference processing section 7 such as inter-sensor interpolation and inter-frame interpolation may be executed according to the subject. That is, inter-sensor interpolation and inter-frame interpolation may be performed in consideration of the type of the subject and the like.

At the acquisition timing Ti3, the control section 4 drives the third sensor 5C as a ranging sensor. This allows a distance image for the subject to be obtained.

An RGB image to be obtained at the acquisition timing Ti3 is estimated on the basis of the distance image acquired at the acquisition timing Ti3 and the spectroscopic information acquired at the acquisition timing Ti2. The estimation may use the RGB image estimated at the acquisition timing Ti2.

Additionally, spectroscopic information to be obtained at the acquisition timing Ti3 is estimated on the basis of the distance image acquired at the acquisition timing Ti3 and the spectroscopic information acquired at the acquisition timing Ti2.

In a case where the imaging apparatus 1 includes three types of sensors 5, the control section 4 drives the first sensor 5A as an RGB sensor again at the acquisition timing Ti4 because a sequence of operations for acquiring sensing information is complete during the acquisition timings Ti1, Ti2, and Ti3.

As described above, the control section 4 executes processing of sequentially switching the sensor 5 to be driven among the plurality of sensors 5 at each acquisition timing Ti.

A flow of processing by each section in the third embodiment will be described with reference to FIG. 17. Processing similar to that in FIG. 12 or FIG. 14 is denoted by the same step numbers and that description of the steps is omitted as appropriate.

First, in step S106, the control section 4 transmits a command for actual measurement. The sensor 5 to which the command is to be transmitted is the first sensor 5A of the first sensing section 2A.

Upon receiving the command, the first sensing section 2A acquires sensing information and outputs a result of the acquisition to the signal processing section 3 in step S107.

In step S108, the signal processing section 3 executes required signal processing according to the type of the sensor 5.

Subsequently, in step S104, the signal processing section 3 executes the inference processing. The inference processing includes performing inter-sensor interpolation or inter-frame interpolation to infer sensing information regarding the sensor 5 not driven.

The processing in each of steps S106, S107, S108, and S104 is repeatedly executed for each sensor 5.

The control section 4 changes the sensor 5 to be processed, finishes a sequence of processing operations, and determines in step S123 whether not to end the acquisition of sensing information.

Upon determining not to end the acquisition of sensing information, the control section 4 proceeds to processing in step 106 (immediately after the start of a flow in FIG. 17) targeted for the first sensing section 2A.

On the other hand, upon determining to end the acquisition of sensing information, each section ends the series of processing operations illustrated in FIG. 17.

As described above, on the basis of the pieces of the sensing information obtained from some of the sensors 5, another piece of sensing information is estimated. This enables a reduction in the number of sensors 5 to be actually driven.

Therefore, power consumption can be reduced. Additionally, limiting the sensors 5 to be driven enables a reduction in electromagnetic noise, the amount of heat generated, the amount of data, and the like. Then, allowing for a reduction in electromagnetic noise enables a reduction in the number of components for electromagnetic noise prevention and in costs, man-hour for implementation, and man-hour for testing. Additionally, allowing for a reduction in the amount of heat generated enables a reduction in the number of radiation components. Furthermore, allowing for a reduction in the amount of data enables a reduction in storage consumption and thus in the number of memory components. These also enable a reduction in costs, man-hour for implementation, and man-hour for testing.

Besides, the reduced number of components enables a reduction in man-hour for design and an increase in the degree of freedom for design.

Note that, in the examples illustrated in FIGS. 16 and 17, only one of the sensors 5 is driven at each acquisition timing but that any of the sensors 5 may necessarily be driven at each acquisition timing. For example, at the acquisition timing Ti1, the first sensor 5A and the second sensor 5B are driven, and at the acquisition timing Ti2, the first sensor 5A and the third sensor 5C are driven. Then, at the acquisition timing Ti3, both the first sensor 5A and the second sensor 5B are driven again. As described above, the RGB sensor may be driven each time.

Additionally, as in the second embodiment, the time length of the interval may be varied according to the sensor 5 to be driven.

### <5. Fourth Embodiment>

In a fourth embodiment, one sensing section 2 includes a plurality of functions.

Specifically, the sensor 5 included in the sensing section 2 with a first function and the sensor 5 included in the sensing section 2 with a second function are disposed on the same axis.

For example, two examples of such an aspect are possible.

In one of the examples, pixels for each function are provided on a sensor surface of the sensor 5 included in the sensing section 2.

Here, in the example described below, a fifth sensing section 2E includes a fifth sensor 5E, and the fifth sensor 5E includes RGB pixels and ranging pixels arranged on a sensor surface, the RGB pixels allowing the fifth sensor 5E to function as an RGB sensor and the ranging pixels allowing the fifth sensor 5E to function as an iToF ranging sensor.

However, the present technology is not limited to this and is widely applicable to a mixture of pixels arranged on one sensor surface for allowing the sensor 5 to function as different types of sensors.

FIG. 18 illustrates a configuration example of the imaging apparatus 1 including the fifth sensor 5E. Note that description of the already described configuration is omitted.

The fifth sensor 5E included in the fifth sensing section 2E feeds the first processing section 6A of the signal processing section 3 with pixel signals output from the R pixels, the G pixels, and the B pixels.

The first processing section 6A executes various types of processing on the pixel signals to generate image data. The generated image data is fed to the inference processing section 7.

Additionally, the fifth sensor 5E feeds the third processing section 6C of the signal processing section 3 with detection signals output from the two respective charge accumulation sections included in the ranging pixel.

On the basis of the detection signals output from the fifth sensor 5E, the third processing section 6C executes distance calculation processing corresponding to the iToF scheme and feeds distance information to the inference processing section 7.

FIG. 19 illustrates an example of a pixel arrangement on the sensor surface of the fifth sensor 5E. In FIG. 19, the R pixels are labeled "R," the G pixels are labeled "G," and the B pixels are labeled "B," and the ranging pixels corresponding to the iToF scheme are labeled "T."

As illustrated in FIG. 19, some of the G pixels in the Bayer arrangement is replaced with the ranging pixels (T pixels).

In FIG. 19, one ranging pixel is arranged in each area of 16 pixels in four rows and four columns. However, it is sufficient if the ranging pixels may appropriately be arranged in accordance with the resolution in the spatial direction in the distance information.

Note that the fifth sensor 5E may be provided with ranging pixels corresponding to an image plane phase-difference scheme instead of the ranging pixels corresponding to the iToF scheme.

In a first example of the present embodiment, on the basis of the inference result from the inference processing section 7, readout can be stopped for one or both of a group of pixels including the R pixels, the G pixels, and the B pixels and a group of pixels including the ranging pixels.

Therefore, a reduction in power consumption and the like can be reduced.

Additionally, in a case where, on the basis of the inference result from the inference processing section 7, both the group of pixels including the R pixels, the G pixels, and the B pixels and the group of pixels including the ranging pixels are determined to be inhibited from being driven, driving of the fifth sensing section 2E itself illustrated in FIG. 18 can be stopped, enabling power consumption to be more significantly reduced.

A second example of the present embodiment is an example in which the sensor 5 included in the sensing section 2 includes two sensor surfaces spaced from each other in an optical axis direction. Specifically, for the pixels arranged on the sensor surfaces of the sensor 5, an upper stage sensor section S1 and a lower stage sensor section S2 are arranged in tandem in the optical axis direction, the upper stage sensor section S1 functioning as an RGB sensor, and the lower stage sensor section S2 functioning as an IR (Infra-Red) sensor.

FIG. 20 illustrates a configuration example of the imaging apparatus 1 including a sixth sensor 5F. Note that description of the already described configuration is omitted.

The sixth sensor 5F included in the sixth sensing section 2F feeds the first processing section 6A of the signal processing section 3 with pixel signals output from the upper stage sensor section S1 as an RGB sensor.

The first processing section 6A executes various types of processing on pixel signals output from the upper stage sensor section S1 to generate image data. The generated data is fed to the inference processing section 7.

Additionally, the sixth sensor 5F feeds the fifth processing section 6E of the signal processing section 3 with detection signals output from the lower stage sensor section S2 as the IR sensor.

The fifth processing section 6E executes various types of processing on the detection signals output from the lower stage sensor section S2 to generate IR image data. The generated image data is fed to the inference processing section 7.

FIG. 21 illustrates a configuration of the pixels included in the sixth sensor 5F.

The sixth sensor 5F includes the upper stage sensor section S1 as an RGB sensor and the lower stage sensor section S2 as an IR sensor. The upper stage sensor section S1 and the lower stage sensor section S2 are arranged in tandem in the optical axis direction.

The upper stage sensor section S1 includes a B layer 8B, a G layer 8G, and an R layer 8R laminated in the optical axis direction, the B layer 8B outputting a signal corresponding to the amount of blue light (B light), the G layer 8G outputting a signal corresponding to the amount of green light (G light), and the R layer 8R outputting a signal corresponding to the amount of red light (R light). Each layer includes an organic photoelectric conductive film layer 9 being sensitive to light in a predetermined wavelength band and accumulating charge corresponding to the amount of light received, and a transparent electrode layer 10 reading out charge generated in the organic photosensitive conductive film layer 9 and outputting the charge as a detection signal.

The lower stage sensor section S2 includes an IR light receiving layer 11 being sensitive to IR light and accumulating charge corresponding to the amount of IR light received, and an electrode layer 12 reading out charge generated in the IR light receiving layer 11 and outputting the charge as a detection signal.

In a second example of the present embodiment, on the basis of the inference result from the inference processing section 7, readout can be stopped for one or both of the upper stage sensor section S1 and the lower stage sensor section S2.

Therefore, a reduction in power consumption and the like can be reduced.

Additionally, in a case where, on the basis of the inference result from the inference processing section 7, readout is determined to be stopped for both the upper stage sensor section S1 and the lower stage sensor section S2, driving of the sixth sensing section 2F itself illustrated in FIG. 20 can be stopped, enabling power consumption to be more significantly reduced.

In the example illustrated in FIG. 21, in the upper stage sensor section S1, the portion receiving R light, the portion receiving G light, and the portion receiving B light are arranged in the optical axis direction. However, similar effects can be produced even in a case where the upper stage sensor section S1 includes a color filter of the Bayer arrangement.

As in the present embodiment, the sensor functions use substantially the same optical axis, allowing the use of substantially the same angle of view on the space. This eliminates the need to consider parallax or the like in the subsequent processing. Therefore, processing loads in the subsequent stage are reduced, enabling a reduction in power consumption.

Note that FIG. 18 and FIG. 20 illustrate the configuration in which the imaging apparatus 1 includes the second sensing section 2B together with the fifth sensing section 2E or the sixth sensing section 2F but that the embodiment of the present technology is not limited to this.

For example, the imaging apparatus 1 may include the sensing section 2 other than the sensing section 2B together with the fifth sensing section 2E or the sixth sensing section 2F. Additionally, the imaging apparatus 1 may include only one or both of the fifth sensing section 2E and the sixth sensing section 2F.

Additionally, one sensing section 2 may include three or more sensor functions. For example, one sensing section 2 may include a function as an RGB sensor, a function as a spectroscopic sensor, and a function as a ranging sensor or may further include a function as an IR sensor or a LiDAR sensor.

In that case, some of the sensors may be arranged in tandem in a direction perpendicular to the optical axis direction, whereas others of the sensors may be arranged in juxtaposition in the optical axis direction. That is, the first example and the second example of the fourth embodiment may be combined with each other.

### <6. Selection from Sensors>

In the example described above, the control section 4 selects the sensor 5 to be driven at each acquisition timing. For this selection processing, an AI model may be used as described above.

Specific description will be provided with reference to FIG. 22.

For example, as in the first embodiment, a neural network which includes an input layer to which a small group of data (predetermined area of an image) in each of an RGB image, spectroscopic information, and a distance image acquired in the pre-measurement phase is input, a plurality of intermediate layers, and an output layer is used.

The output layer outputs a value for each type of sensor 5. By driving, at the next acquisition timing for sensing information, the sensor 5 for which the output layer indicates a predetermined value or larger, the sensor 5 selection processing can be implemented in the control section 4.

Note that, as illustrated in FIG. 22, in a case where the sensor 5 to be selected is output for each input data (for example, an RGB image or a distance image), selection of the sensor 5 can appropriately be performed by integrating the respective outputs together by post processing.

Alternatively, by constructing a neural network in such a manner that the network includes the input layer to which all pieces of the sensing information are input, the sensor 5 can be selected without the need for integration based on post processing.

Additionally, by using the time length of the interval instead of the type of the sensor 5 as a label associated with the value from the output layer, the time lengths of the intervals T1 and T2 in the second embodiment can be determined.

Thus, for example, for a moving subject or the like, a shorter interval is selected to enable sensing information to be acquired thoroughly in the time direction, and for image capturing of a scenery image or the like in which the subject is rather immobile, a longer interval is selected to enable further reduction of power consumption and the like.

### <7. Conclusion>

As described above, the information processing apparatus as the imaging apparatus 1 includes the identification processing section (inference processing section 7) identifying the subject for sensing on the basis of the pieces of sensing information obtained from at least some of the multiple sensors 5, and the control section 4 selecting the sensor 5 for obtaining new sensing information from among the plurality of sensors 5 according to the identified subject.

Identification of the subject includes not only identification of the type of the subject such as a person, an animal, or a vehicle but also identification of a scene in which sensing information for the subject is obtained. For example, a person in the daytime, a person in the nighttime, a daytime scene, a night scene, or the like is identified as the subject for sensing.

Then, the appropriate sensor 5 can be selected from among the plurality of sensors 5 according to the selected subject. This allows driving of only the sensor 5 selected from among all the mounted sensors 5, enabling a reduction in power consumption. Additionally, limiting the sensors 5 to be driven enables a reduction in electromagnetic noise, the amount of heat generated, the amount of data, and the like. Then, allowing for a reduction in electromagnetic noise enables a reduction in the number of components for electromagnetic noise prevention and in costs, man-hour for implementation, and man-hour for testing. Additionally, allowing for a reduction in the amount of heat generated enables a reduction in the number of radiation components. Furthermore, allowing for a reduction in the amount of data enables a reduction in storage consumption and thus in the number of memory components. These also enable a reduction in costs, man-hour for implementation, and man-hour for testing.

Besides, the reduced number of components enables a reduction in man-hour for design and an increase in the degree of freedom for design.

Note that, in a case where different types of sensors 5 are provided as the plurality of sensors 5, the appropriate type of sensor 5 may be exclusively selected and driven according to a desire to be realized using the imaging apparatus 1. This allows the sensors 5 to be clearly sorted into the sensors 5 necessary for realizing the desire and the sensors 5 unnecessary for realizing the desire, enabling a reduction in power consumption, and the like.

As described in the first embodiment, the identification processing section (inference processing section 7) of the imaging apparatus 1 may identify the subject on the basis of the pieces of sensing information obtained from all of the plurality of sensors 5.

Thus, the subject can be accurately identified on the basis of the pieces of sensing information obtained by looking at the subject from multilateral viewpoints, allowing the appropriate sensor 5 to be easily selected.

As described in the first embodiment, the identification processing section (inference processing section 7) of the imaging apparatus 1 may use simplified sensing information as sensing information for identifying the subject, and the control section 4 may make a selection for capturing of a still image.

Thus, the subject can be identified on the basis of the sensing information obtained without maximum movement of the sensors. Therefore, a more significant reduction in power consumption and the like can be achieved.

As described with reference to FIG. 2 and the like, the identification processing section (inference processing section 7) of the imaging apparatus 1 may use, as the simplified sensing information, sensing information obtained from pixels fewer than the effective pixels in the RGB sensor (first sensor 5A).

This enables a reduction in power consumption and the like for driving of the RGB sensor in the pre-measurement phase.

As described with reference to FIG. 3 and the like, the identification processing section (inference processing section 7) of the imaging apparatus 1 may use, as the simplified sensing information, sensing information acquired with use of only part of the measured wavelengths in the spectroscopic sensor (the second sensor 5B) .

This enables a reduction in power consumption and the like for driving of the spectroscopic sensor in the pre-measurement phase.

As described with reference to FIG. 4 and the like, the identification processing section (inference processing section 7) of the imaging apparatus 1 may use, as the simplified sensing information, sensing information obtained by reducing the number of tap switching operations in the iToF ranging sensor (third sensor 5C) below the predetermined number.

This enables a reduction in power consumption and the like for driving of the ranging sensor in the pre-measurement phase.

As described with reference to FIG. 5 and the like, in a case where the subject identified by the identification processing section (inference processing section 7) is a plant, the control section 4 of the imaging apparatus 1 may select the RGB sensor (first sensor 5A) and the spectroscopic sensor (second sensor 5B).

For example, the subject is assumed to be a vegetable or the like. Thus, in the actual measurement phase following the pre-measurement phase, the RGB sensor and the spectroscopic sensor are selected as the sensors 5 required to measure the degree of freshness of the vegetable, and the like. The other sensors 5 are not selected, and thus, the sensors 5 to be driven can be limited, enabling a reduction in power consumption and the like.

As described with reference to FIG. 10, FIG. 11, and the like, in a case where the subject identified by the identification processing section (inference processing section 7) is a mobile body, the control section 4 of the imaging apparatus 1 may select the RGB sensor (first sensor 5A) and the LiDAR sensor (fourth sensor 5D).

For example, the subject is assumed to be a vehicle or the like. Thus, in the actual measurement phase following the pre-measurement phase, the RGB sensor and the LiDAR sensor are selected as the sensors 5 required to identify the positional relation with the vehicle. The other sensors 5 are not selected, and thus, the sensors 5 to be driven can be limited, enabling a reduction in power consumption and the like.

As described with reference to FIG. 7 and the like, in a case where the distance between the subject identified by the identification processing section (inference processing section 7) and the sensor 5 is less than a predetermined distance, the control section 4 of the imaging apparatus 1 may select the RGB sensor (first sensor 5A) and the ranging sensor (third sensor 5C).

In a case where the distance between the subject and the sensor is short, for example, in a case where the distance between the in-vehicle sensor 5 and the preceding vehicle as a subject is short, the ranging sensor for accurately measuring the distance is selected in addition to the RGB sensor. The other sensors 5 are not selected, and thus, the sensors 5 to be driven can be limited, enabling a reduction in power consumption and the like.

As described with reference to FIG. 6 and the like, in a case where the subject identified by the identification processing section (inference processing section 7) is a scenery, the control section 4 of the imaging apparatus 1 may exclusively select the RGB sensor (first sensor 5A).

In a case where the subject is a scenery, the sensors 5 which sense reflected light from the subject, such as the ranging sensor (third sensor 5C), are not appropriate. When only the RGB sensor is selected in such a manner as to avoid selecting such sensors 5 as the ranging sensor, driving the unnecessary sensors 5 is avoided, and a reduction in power consumption and the like can be achieved.

As described with reference to FIG. 9 and the like, in a case where the identification processing section (inference processing section 7) identifies the subject as the face of a person on the basis of the pieces of sensing information obtained from the RGB sensor (first sensor 5A) and the ranging sensor (third sensor 5C) as some of the sensors 5, the control section 4 of the imaging apparatus 1 may exclusively select the spectroscopic sensor (second sensor 5B).

Selecting the spectroscopic sensor allows acquisition of sensing data for calculating the probability that the subject is the face of a person.

As described with reference to FIG. 8 and the like, in a case where the identification processing section (inference processing section 7) identifies the subject as the face of a person on the basis of the pieces of sensing information obtained from the RGB sensor (first sensor 5A) and the spectroscopic sensor (second sensor 5B) as some of the sensors 5, the control section 4 of the imaging apparatus 1 may select the ranging sensor (third sensor 5C).

Selecting the ranging sensor allows acquisition of sensing data for calculating the probability that the subject is the face of a person. That is, whether or not the subject is the face of a person can be more accurately determined by comparing the unevenness information regarding the subject with the unevenness information regarding the face of a person. Additionally, acquiring the unevenness information in detail enables personal authentication processing in which the subject is compared with a particular person.

As described in the second embodiment, the control section 4 of the imaging apparatus 1 may determine the intervals T1 and T2 for acquisition of sensing information according to the subject identified by the identification processing section (inference processing section 7) .

Accordingly, the acquisition intervals for obtaining sensing information are optimized. As a result, an unnecessary increase in the number of acquisition timings and resultant increased power consumption can be prevented.

As described in the third embodiment, the information processing apparatus as the imaging apparatus 1 includes the estimation processing section (inference processing section 7) estimating sensing information from the sensor 5 not driven on the basis of pieces of sensing information obtained by driving some of the multiple sensors 5, and the control section 4 sequentially switching the sensor 5 to be driven from among the plurality of sensors 5 at each of the acquisition timings Ti (Til, Ti2, Ti3, and Ti4) for sensing information.

That is, on the basis of the pieces of sensing information obtained from some of the sensors 5, another piece of sensing information is estimated. This enables a reduction in the number of sensors 5 to be actually driven.

Therefore, power consumption can be reduced. Additionally, limiting the sensors 5 to be driven enables a reduction in electromagnetic noise, the amount of heat generated, the amount of data, and the like. Then, allowing for a reduction in electromagnetic noise enables a reduction in the number of components for electromagnetic noise prevention and in costs, man-hour for implementation, and man-hour for testing. Additionally, allowing for a reduction in the amount of heat generated enables a reduction in the number of radiation components. Furthermore, allowing for a reduction in the amount of data enables a reduction in storage consumption and thus in the number of memory components. These also enable a reduction in costs, man-hour for implementation, and man-hour for testing.

Besides, the reduced number of components enables a reduction in man-hour for design and an increase in the degree of freedom for design.

As described in the third embodiment, the imaging apparatus 1 may include the identification processing section (inference processing section 7) identifying the subject for sensing on the basis of the pieces of sensing information obtained by driving some of the sensors 5 and the estimated sensing information.

Identification of the subject includes not only identification of the type of the subject such as a person, an animal, or a vehicle but also identification of a scene in which sensing information for the subject is obtained. For example, a person in the daytime, a person in the nighttime, a daytime scene, a night scene, or the like is identified as the subject for sensing. This enables switching to the appropriate sensor 5.

As described in the third embodiment, the estimation processing section (inference processing section 7) may perform estimation on the basis of past sensing information.

For example, in a case where the driven sensor 5 is switched for each imaging frame, the sensing information for the sensor 5 not driven is estimated on the basis of pieces of sensing information resulting from imaging in the preceding frame and a frame preceding the preceding frame.

Thus, interpolation is performed not only between the sensors 5 but also between the frames, allowing the accuracy of the estimated sensing information to be improved.

As described in the third embodiment, the estimation processing section (inference processing section 7) of the imaging apparatus 1 may perform estimation on the basis of the past sensing information regarding the sensor 5 not driven.

By using, in the inter-frame interpolation, the sensing information acquired in the past from the sensor 5 not driven, the accuracy of the sensing information as an estimation result can be improved.

In the third embodiment described above, interpolation using the sensing information acquired last is described as inter-frame interpolation. However, inter-frame interpolation may be performed using the sensing information acquired before the last acquisition.

How old sensing information is used for inter-frame interpolation is desirably determined on the basis of the arithmetic capability of a processor executing processing for inter-frame interpolation.

Note that, in the examples described above, the configuration in which each sensor 5 outputs frame data is illustrated. However, the sensor need not necessarily output data for each frame depending on the type of the sensor 5.

Additionally, in the examples described above, the RGB sensor, the spectroscopic sensor, the ranging sensor, and the LiDAR sensor are illustrated as the sensor 5, but the imaging apparatus 1 may include any other sensor 5.

For example, various sensors are possible such as a temperature sensor, a humidity sensor, a proximity sensor, an odor sensor, and EVS (Event-based Vision Sensors).

Note that the information processing apparatus as the imaging apparatus 1 described above can be considered to include the estimation processing section (inference processing section 7) performing estimation for power saving driving by inputting, to a learning model, pieces of sensing information obtained by driving at least some of the multiple sensors 5, and the control section 4 driving only some of the multiple sensors 5 through the estimation processing.

Such an information processing apparatus enables a reduction in the number of the sensors 5 to be actually driven.

Therefore, the power consumption of the information processing apparatus can be reduced. Additionally, limiting the sensors 5 to be driven enables a reduction in electromagnetic noise, the amount of heat generated, the amount of data, and the like. Then, allowing for a reduction in electromagnetic noise enables a reduction in the number of components for electromagnetic noise prevention and in costs, man-hour for implementation, and man-hour for testing. Additionally, allowing for a reduction in the amount of heat generated enables a reduction in the number of radiation components. Furthermore, allowing for a reduction in the amount of data enables a reduction in storage consumption and thus in the number of memory components. These also enable a reduction in costs, man-hour for implementation, and man-hour for testing.

Besides, the reduced number of components enables a reduction in man-hour for design and an increase in the degree of freedom for design.

Suitable apparatuses to which such an information processing apparatus is applied include portable terminal apparatuses such as a smartphone for which there is a great demand for a reduction in power consumption. Additionally, in another usage aspect, in an in-vehicle camera, estimation processing is executed for identifying a subject in the angle of view while continuously acquiring RGB images by driving the first sensor 5A, and in a case where a subject to be noted is detected, the other sensors 5 are driven to accurately identify the subject.

Alternatively, the information processing apparatus described above may be applied to a surveillance camera such that, in a usual surveillance state, the sensors 5 driven are limited to enable a reduction in power consumption and the like and that, in a case where a moving subject is detected in the angle of view, the other sensors 5 are driven to accurately identify the subject.

Additionally, in a case where the information processing apparatus in the first embodiment described above is applied to a digital camera, while an operation of pressing a shutter button halfway down is being performed to focus on a particular subject, the pre-measurement phase can be continuously executed to continue identification of the subject and selection of the sensor 5 to be driven, and when an operation of further pressing the shutter button down is performed for imaging, the sensor 5 selected last can exclusively be driven to acquire sensing information regarding the subject such as a captured image of the subject. Thus, the sensor 5 to be driven is automatically selected according to the focused-on subject, and thus, the photographer can unconsciously acquire appropriate sensing information, while producing effects such as a reduction in power consumption.

A program executed by the information processing apparatus as the imaging apparatus 1 described above causes an arithmetic processing apparatus to execute the processing illustrated in each of FIG. 12, FIG. 14, FIG. 17, and the like, and can be pre-recorded in an HDD (Hard Disk Drive) as a recording medium built into equipment such as a computer apparatus, a ROM (Read Only Memory) in a microcomputer with a CPU (Central Processing Unit), or the like. Alternatively, the program can be transitorily or permanently stored (recorded) in a removable recording medium such as a flexible disk, a CD-ROM (Compact Disk Read Only Memory), an MO (Magneto Optical) disc, a DVD (Digital Versatile Disc), a Blu-ray Disc (registered trademark), a magnetic disk, a semiconductor memory, or a memory card. Such a removable recording medium can be provided as what is called package software.

Additionally, such a program can also be installed in a personal computer from the removable recording medium or downloaded from a download site via a network such as a LAN or the Internet.

Note that the effects described herein are only illustrative and not restrictive, and other effects may be produced.

Additionally, the examples described above may be combined with one another in any manner, and the various effects described above can be exerted even if various combinations are used.

### <8. Present Technology>

(1) An information processing apparatus including:
   an identification processing section identifying a subject for sensing on the basis of pieces of sensing information obtained from at least some of multiple sensors; and
   a control section selecting a sensor for obtaining new sensing information from among the multiple sensors, according to the identified subject.
(2) The information processing apparatus according to (1) above, in which
   the identification processing section identifies the subject on the basis of pieces of sensing information obtained from all of the multiple sensors.
(3) The information processing apparatus according to any of (1) or (2) above, in which
   the identification processing section uses simplified sensing information as sensing information for identifying the subject, and
   the control section performs the selection for capturing a still image.
(4) The information processing apparatus according to (3) above, in which
   the identification processing section uses, as the simplified sensing information, sensing information obtained from pixels fewer than effective pixels in an RGB sensor.
(5) The information processing apparatus according to any of (3) or (4) above, in which
   the identification processing section uses, as the simplified sensing information, sensing information acquired with use of only some of measured wavelengths in a spectroscopic sensor.
(6) The information processing apparatus according to any of (3) to (5) above, in which
   the identification processing section uses, as the simplified sensing information, sensing information obtained by reducing the number of tap switching operations in an iToF ranging sensor below a predetermined number.
(7) The information processing apparatus according to any of (1) to (6) above, in which
   the control section selects an RGB sensor and a spectroscopic sensor in a case where the subject identified by the identification processing section is a plant.
(8) The information processing apparatus according to any of (1) to (6) above, in which
   the control section selects an RGB sensor and a LiDAR sensor in a case where the subject identified by the identification processing section is a mobile body.
(9) The information processing apparatus according to any of (1) to (6) above, in which
   the control section selects an RGB sensor and a ranging sensor in a case where a distance between the subject identified by the identification processing section and a sensor is less than a predetermined distance.
(10) The information processing apparatus according to any of (1) to (6) above, in which
   the control section selects only an RGB sensor in a case where the subject identified by the identification processing section is a scenery.
(11) The information processing apparatus according to any of (1) to (6) above, in which
   the control section selects a spectroscopic sensor in a case where the identification processing section identifies the subject as a face of a person on the basis of pieces of sensing information obtained from an RGB sensor and a ranging sensor as some of the sensors.
(12) The information processing apparatus according to any of (1) to (6) above, in which
   the control section selects a ranging sensor in a case where the identification processing section identifies the subject as a face of a person on the basis of pieces of sensing information obtained from an RGB sensor and a spectroscopic sensor as some of the sensors.
(13) The information processing apparatus according to any of (1) to (12) above, in which
   the control section determines an interval for acquisition of the sensing information according to the subject identified by the identification processing section.
(14) An information processing apparatus including:
   an estimation processing section estimating sensing information from a sensor not driven on the basis of pieces of sensing information obtained by driving some of multiple sensors; and
   a control section sequentially switching the sensor to be driven from among the multiple sensors at each acquisition timing for sensing information.
(15) The information processing apparatus according to (14) above, including:
   an identification processing section identifying the subject for sensing on the basis of pieces of sensing information obtained by driving some of the sensors and the estimated sensing information.
(16) The information processing apparatus according to any of (14) or (15) above, in which
   the estimation processing section performs the estimation on the basis of past sensing information.
(17) The information processing apparatus according to (16) above, in which
   the estimation processing section performs the estimation on the basis of past sensing information regarding a sensor not driven.

### [Reference Signs List]

1: Imaging apparatus (information processing apparatus)
4: Control section
5: Sensor
5A: First sensor (RGB sensor)
5B: Second sensor (spectroscopic sensor)
5C: Third sensor (ranging sensor)
5D: Fourth sensor (LiDAR sensor)
7: Inference processing section (identification processing section, estimation processing section)
T1, T2: Interval
Ti1, Ti2, Ti3, Ti4: Acquisition timing

## Claims

1. An information processing apparatus comprising:
an identification processing section identifying a subject for sensing on a basis of pieces of sensing information obtained from at least some of multiple sensors; and
a control section selecting a sensor for obtaining new sensing information from among the multiple sensors, according to the identified subject.

2. The information processing apparatus according to claim 1, wherein
the identification processing section identifies the subject on a basis of pieces of sensing information obtained from all of the multiple sensors.

3. The information processing apparatus according to claim 1, wherein
the identification processing section uses simplified sensing information as sensing information for identifying the subject, and
the control section performs the selection for capturing a still image.

4. The information processing apparatus according to claim 3, wherein
the identification processing section uses, as the simplified sensing information, sensing information obtained from pixels fewer than effective pixels in an RGB sensor.

5. The information processing apparatus according to claim 3, wherein
the identification processing section uses, as the simplified sensing information, sensing information acquired with use of only some of measured wavelengths in a spectroscopic sensor.

6. The information processing apparatus according to claim 3, wherein
the identification processing section uses, as the simplified sensing information, sensing information obtained by reducing the number of tap switching operations in an iToF ranging sensor below a predetermined number.

7. The information processing apparatus according to claim 1, wherein
the control section selects an RGB sensor and a spectroscopic sensor in a case where the subject identified by the identification processing section is a plant.

8. The information processing apparatus according to claim 1, wherein
the control section selects an RGB sensor and a LiDAR sensor in a case where the subject identified by the identification processing section is a mobile body.

9. The information processing apparatus according to claim 1, wherein
the control section selects an RGB sensor and a ranging sensor in a case where a distance between the subject identified by the identification processing section and a sensor is less than a predetermined distance.

10. The information processing apparatus according to claim 1, wherein
the control section selects only an RGB sensor in a case where the subject identified by the identification processing section is a scenery.

11. The information processing apparatus according to claim 1, wherein
the control section selects a spectroscopic sensor in a case where the identification processing section identifies the subject as a face of a person on a basis of pieces of sensing information obtained from an RGB sensor and a ranging sensor as some of the sensors.

12. The information processing apparatus according to claim 1, wherein
the control section selects a ranging sensor in a case where the identification processing section identifies the subject as a face of a person on a basis of pieces of sensing information obtained from an RGB sensor and a spectroscopic sensor as some of the sensors.

13. The information processing apparatus according to claim 1, wherein
the control section determines an interval for acquisition of the sensing information according to the subject identified by the identification processing section.

14. An information processing apparatus comprising:
an estimation processing section estimating sensing information from a sensor not driven on a basis of pieces of sensing information obtained by driving some of multiple sensors; and
a control section sequentially switching the sensor to be driven from among the multiple sensors at each acquisition timing for sensing information.

15. The information processing apparatus according to claim 14, comprising:
an identification processing section identifying the subject for sensing on a basis of pieces of sensing information obtained by driving some of the sensors and the estimated sensing information.

16. The information processing apparatus according to claim 14, wherein
the estimation processing section performs the estimation on a basis of past sensing information.

17. The information processing apparatus according to claim 16, wherein
the estimation processing section performs the estimation on a basis of past sensing information regarding a sensor not driven.
